# EUROPEAN PATENT APPLICATION

(11) **EP 4 510 278 A1**
(43) Date of publication of application: **19.02.2025**
(21) Application number: 22962470.5
(22) Date of filing: 21.10.2022
(51) Int. Cl.: H01M 10/0566, H01M 4/13, H01M 10/42

(54) **LITHIUM ION BATTERY HAVING IMPROVED ELECTROLYTE VISCOSITY AND CB VALUE AND ELECTRIC DEVICE**

(71) Applicant: Contemporary Amperex Technology Co., Limited, Ningde, Fujian 352100 (CN)
(72) Inventor: GUO, Jie, Ningde, Fujian 352100 (CN); HAN, Changlong, Ningde, Fujian 352100 (CN); JIANG, Bin, Ningde, Fujian 352100 (CN); WU, Zeli, Ningde, Fujian 352100 (CN); WANG, Guan, Ningde, Fujian 352100 (CN); ZHANG, Cuiping, Ningde, Fujian 352100 (CN); HUANG, Lei, Ningde, Fujian 352100 (CN); CAI, Linhua, Ningde, Fujian 352100 (CN)
(74) Representative: Thoma, Michael
(86) International application number: PCT/CN2022/126792
(87) International publication number: WO 2024/082287

(57) **Abstract**

The present application relates to a lithium ion battery and a power consuming device, the lithium ion battery comprising a positive electrode, a negative electrode and an electrolyte solution, wherein the electrolyte solution has a viscosity c of 1-6 mPa.s at 25°C, as measured in accordance with GB/T10247-2008; and the ratio CB of the lithium intercalation capacity of the negative electrode to the delithiation capacity of the positive electrode is 1.05-1.5. The lithium ion battery has high-rate fast charging capability and good cycling performance.

## Description

### Technical Field

The present application relates to the technical field of lithium batteries, and in particular to a lithium ion battery and a power consuming device.

### Background Art

In recent years, with an increasingly wide application range of lithium-ion batteries, the lithium-ion batteries are widely used in energy storage power systems such as hydroelectric, thermal, wind and solar power stations, as well as power tools, electric bicycles, electric motorcycles, electric vehicles, military equipment, aerospace and other fields. However, compared with traditional fuel-driven equipment, problems such as mileage anxiety and long charging time have become the main problems that hinder the development of secondary batteries. How to improve the fast charging capability of secondary batteries is one of the focuses of those skilled in the art.

Improving the fast charging capability of batteries is a systematic project, which needs to change and upgrade the materials of batteries. The most researched in traditional technology is the improvement of a negative electrode material, but at the same time, it also needs the cooperation of electrolyte solution, conductive agent and other materials. Therefore, the existing batteries with fast charging capability still need to be further improved.

### Summary of the Invention

The present application is made in view of the above problem, and aims to provide a lithium ion battery with improved electrolyte solution viscosity and CB value, which comprises an electrolyte solution with a specific viscosity and has a ratio CB of the lithium intercalation capacity of the negative electrode to the delithiation capacity of the positive electrode in a specific range, such that the corresponding battery has high-rate fast charging capacity and good cycling performance.

In order to achieve the above objective, the present application provides a lithium ion battery and a power consuming device comprising same.

A first aspect of the present application provides a lithium ion battery, comprising a positive electrode, a negative electrode and an electrolyte solution, wherein the electrolyte solution has a viscosity c of 1-6 mPa.s at 25°C; and the ratio CB of the lithium intercalation capacity of the negative electrode to the delithiation capacity of the positive electrode is 1.05-1.5.

In the lithium ion battery of the present application, by comprising an electrolyte solution with a specific viscosity and having a ratio CB of the lithium intercalation capacity of the negative electrode to the delithiation capacity of the positive electrode in a specific range, the liquid phase transport conditions of lithium ions are improved, and more active sites are provided at the negative electrode for lithium ions to be intercalated, thereby improving the high-rate fast charging capability and cycling performance of the battery.

In any embodiment, during the charging process of the battery from 0% state of charge to 70% state of charge at 35°C, there is a current that is greater than or equal to 4 times the delithiation capacity of the positive electrode per unit time. Thus, the high-rate fast charging capability and cycling performance of the battery can be further improved.

In any embodiment, the average current of the battery during the charging process from 0% state of charge to 70% state of charge at 35°C is greater than or equal to 4 times the delithiation capacity of the positive electrode per unit time. Thus, the high-rate fast charging capability and cycling performance of the battery can be further improved.

In any embodiment, the negative electrode comprises a current collector and negative electrode active material layers attached to at least one surface of the current collector, wherein the active material layers comprise a first active material layer comprising a first negative electrode active material and a second active material layer comprising a second negative electrode active material attached to the surface of the first active material layer that is far away from the current collector. Thus, more active sites can be further provided at the negative electrode for lithium ions to be intercalated, thereby improving the high-rate fast charging capability and cycling performance of the battery.

In any embodiment, the first negative electrode active material has an average volume particle size Dᵥ₅₀ greater than that of the second negative electrode active material. Thus, more active sites can be further provided at the negative electrode for lithium ions to be intercalated, thereby improving the high-rate fast charging capability and cycling performance of the battery.

In any embodiment, the first negative electrode active material layer has a compacted density greater than that of the second negative electrode active material layer. Thus, more active sites can be further provided at the negative electrode for lithium ions to be intercalated, thereby improving the high-rate fast charging capability and cycling performance of the battery.

In any embodiment, the negative electrode active material layers have a thickness of 30-150 µm, a porosity of 20-60%, and a compacted density of 1.2-1.9 g/cm³. Thus, more active sites can be further provided at the negative electrode for lithium ions to be intercalated, thereby improving the high-rate fast charging capability and cycling performance of the battery.

In any embodiment, the electrolyte solution comprises a lithium salt, a solvent and an additive, and the lithium salt comprises a primary lithium salt and a secondary lithium salt. Thus, the liquid phase transport conditions of lithium ions can be further improved, thereby improving the high-rate fast charging capability and cycling performance of the battery.

In any embodiment, the primary lithium salt is different from the secondary lithium salt, and the primary lithium salt or the secondary lithium salt is each independently selected from at least one of LiPF₆, LiN(SO₂F)₂, LiBF₄, LiN(CF₃SO₂)₂, LiClO₄, LiAsF₆, LiB(C₂O₄)₂, LiBF₂C₂O₄, LiDFOP, LiPO₂F₂, LiFSO₃, and LiF. Thus, the liquid phase transport conditions of lithium ions can be further improved, thereby improving the high-rate fast charging capability and cycling performance of the battery.

In any embodiment, the primary lithium salt is lithium hexafluorophosphate or LiFSI, and the content thereof is 8-20 wt%, based on the total weight of the electrolyte solution; and the secondary lithium salt is at least one of lithium difluorooxalate borate, LiBF₄, LiB(C₂O₄)₂, and lithium difluorodioxalate phosphate (LiDFOP), and the content thereof is 0.001-2 wt%, based on the total weight of the electrolyte solution. Thus, the liquid phase transport conditions of lithium ions can be further improved, thereby improving the high-rate fast charging capability and cycling performance of the battery.

In any embodiment, the solvent comprises a cyclic ester and a linear ester, and the content of the cyclic ester accounts for 5-40% of the mass of the solvent, and the content of the linear ester accounts for 60-95% of the mass of the solvent. Thus, further improving the viscosity of the electrolyte solution can improve the liquid phase transport conditions of lithium ions, thereby improving the high-rate fast charging capability and cycling performance of the battery.

In any embodiment, the cyclic ester is ethylene carbonate, propylene carbonate or a combination thereof, and the linear ester includes dimethyl carbonate. Thus, further improving the viscosity of the electrolyte solution can improve the liquid phase transport conditions of lithium ions, thereby improving the high-rate fast charging capability and cycling performance of the battery.

In any embodiment, the linear ester is selected from diethyl carbonate, ethyl methyl carbonate, methyl formate, methyl acetate, ethyl acetate, butyl acetate, methyl propionate, methyl butyrate, ethyl butyrate, propyl butyrate, butyl butyrate, isopropyl acetate, isoamyl acetate, and a combination thereof. Thus, further improving the viscosity of the electrolyte solution can improve the liquid phase transport conditions of lithium ions, thereby improving the high-rate fast charging capability and cycling performance of the battery.

In any embodiment, in the electrolyte solution, the molar concentration b (mol/L) of the lithium salt, the percentage a% of the linear ester in the solvent accounting for the mass of the solvent, and the viscosity c of the electrolyte solution at 25°C satisfy the following relationship: 2 ≤ c + 2*a% ≤ 8; and
2 ≤ c + b ≤ 8. Thus, further improving the viscosity of the electrolyte solution can improve the liquid phase transport conditions of lithium ions, thereby improving the high-rate fast charging capability and cycling performance of the battery.

In any embodiment, the positive electrode comprises a current collector and a positive electrode active material layer comprising a positive electrode active material attached to at least one surface of the current collector, and the positive electrode active material comprises a ternary material of formula LiNiₓCo_{y}Q_{z}M_{1-x-y-z}O₂, wherein Q is Mn or Al, M includes at least one of Co, Ni, Mn, Mg, Cu, Zn, Al, Sn, B, Ga, Cr, Sr, V and Ti, 0 ≤ x < 1, 0 ≤ y ≤ 1, 0 ≤ z ≤ 1, and x + y + z ≤ 1. Thus, the high-rate fast charging capability and the cycling performance of the battery are further improved.

A second aspect of the present application provides a power consuming device comprising a secondary battery of the first aspect of the present application.

In the secondary battery of the present application, by comprising an electrolyte solution with a specific viscosity and having a ratio CB of the lithium intercalation capacity of the negative electrode to the delithiation capacity of the positive electrode in a specific range, the liquid phase transport conditions of lithium ions are improved, so that lithium ions can rapidly migrate to the negative electrode, and more active sites are provided at the negative electrode for lithium ions to be intercalated, thereby improving the high-rate fast charging capability and cycling performance of the battery.

### Brief Description of the Drawings

Fig. 1 shows a schematic diagram of a secondary battery according to an embodiment of the present application.
Fig. 2 shows an exploded view of the secondary battery according to an embodiment of the present application as shown in Fig. 1.
Fig. 3 shows a schematic diagram of a power consuming device using a secondary battery according to an embodiment of the present application as a power source.

Description of reference signs:
5. secondary battery; 51. housing; 52. electrode assembly; 53. cover plate; 6. power consuming device.

### Detailed Description of Embodiments

Hereafter, embodiments of the lithium ion battery and power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

At present, compared with traditional fuel-driven equipment, problems such as mileage anxiety and long charging time have become the main problems that hinder the development of secondary batteries. How to improve the fast charging capability of secondary batteries is one of the focuses of those skilled in the art. Improving the fast charging capability of batteries is a systematic project, which needs to change and upgrade the materials of batteries. The most researched in traditional technology is the improvement of a negative electrode material, but at the same time, it also needs the cooperation of electrolyte solution, conductive agent and other materials. Therefore, the existing batteries with fast charging capability still need to be further improved. The inventors found that the lithium ion battery of the first aspect of the present application comprises an electrolyte solution with a specific viscosity and has a ratio CB of the lithium intercalation capacity of the negative electrode to the delithiation capacity of the positive electrode in a specific range, so that the battery has a high-rate fast charging capacity and good cycling performance.

### Lithium ion battery

In some embodiments, the present application provides a lithium ion battery, comprising a positive electrode, a negative electrode and an electrolyte solution, wherein the electrolyte solution has a viscosity c of 1-6 mPa.s at 25°C, preferably 2-5 mPa.s, and further optionally 3.5-4 mPa.s, as measured in accordance with GB/T10247-2008; and the ratio CB of the lithium intercalation capacity of the negative electrode to the delithiation capacity of the positive electrode is 1.05-1.5, optionally 1.1-1.3, and further optionally 1.1-1.2.

In the lithium ion battery of the present application, by comprising an electrolyte solution with a specific viscosity and having a ratio CB of the lithium intercalation capacity of the negative electrode to the delithiation capacity of the positive electrode in a specific range, the positive electrode and the negative electrode can be infiltrated and back-sucked better and faster, such that the liquid phase transport conditions of lithium ions are improved, and more active sites are provided at the negative electrode for lithium ions to be intercalated, thereby improving the high-rate fast charging capability and cycling performance of the battery.

In the present application, the term "delithiation capacity of the positive electrode" means the actual delithiation capacity of the positive electrode material in the battery. The test method therefor is as follows: the battery is disassembled in a PRS340/11-119-11 Braun glove box, and the positive electrode plate is taken and assembled into a positive electrode-lithium plate CR2430-type semi-button battery, the area of the positive electrode plate is a mm², and the electrolyte solution is a solution of 1 M LiPF6 in EC/EMC/DEC = 3/5/2; and then the assembled semi-button battery is allowed to stand for 3 h, and the test is carried out at 25°C. First, the battery is charged for delithiation at 0.1 C in a voltage range of 2.5-e V, where e is the upper limit voltage designed for the cell, and then the battery is discharged at 0.05 C for lithium intercalation to 2.5 V, this process is repeated for 2 cycles, and the capacity of the discharged button battery in the second cycle is recorded as Y mAh. In the actual design of the battery, the length of the positive electrode plate is b mm, the width is c mm, and the number of surfaces coated with the positive electrode active material of the positive electrode current collector is d, then the delithiation capacity of the positive electrode = Y/a*b*c*d.

In some embodiments, the delithiation capacity of the positive electrode is 2000-300000 mAh, optionally 3000-150000 mAh, and further optionally 3000-5000 mAh.

In the present application, the term "lithium intercalation capacity of the negative electrode" means the actual lithium intercalation capacity of the negative electrode material in the battery. The test method therefor is as follows: the battery is disassembled in a PRS340/11-119-11 Braun glove box, and the negative electrode plate is taken and assembled into a negative electrode-lithium plate CR2430-type semi-button battery, the area of the negative electrode plate is f mm², and the electrolyte solution is a solution of 1 M LiPF6 in EC/EMC/DEC = 3/5/2; and then the assembled semi-button battery is allowed to stand for 3 h, and the test is carried out at 25°C. First, the battery is discharged for lithium intercalation at 0.1 C in a voltage range of 2 V - 0 V, and then charged at 0.05 C for delithiation to 2 V, this process is repeated for 2 cycles, and the capacity of the discharged button battery in the second cycle is recorded as Z mAh. In the actual design of the battery, the length of the negative electrode plate is h mm, the width is i mm, and the number of surfaces coated with the negative electrode active material of the negative electrode current collector is d, then the lithium intercalation capacity of the negative electrode = Z/f*h*i*d.

In some embodiments, the lithium intercalation capacity of the negative electrode is 2100-315000 mAh, optionally 3000-100000 mAh, and further optionally 3500-4500 mAh.

In some embodiments, during the charging process from 0% state of charge (SOC) to 70% state of charge (0-70%SOC) at 35°C, the battery has a current greater than or equal to 4 times the delithiation capacity of the positive electrode per unit time, optionally the current is greater than or equal to 5 times the delithiation capacity of the positive electrode per unit time, and further optionally the current is 4 times to 6.5 times the delithiation capacity of the positive electrode per unit time. Thus, the high-rate fast charging capability and cycling performance of the battery can be further improved. In such embodiment, the current is an instantaneous current.

In the present application, the "delithiation capacity of the positive electrode per unit time" refers to the delithiation capacity of the positive electrode within the unit time (1 h); and the average current generated during this process is the basis for quantification the current in the present application. Thus, the delithiation capacity of the positive electrode can be correlated with the current.

In some embodiments, during the charging process from 0% state of charge to 70% state of charge at 35°C, a constant current direct charging method can be usually used, for example, charging from 0% state of charge to 70% state of charge at a current of 4 times the delithiation capacity of the positive electrode per unit time; and a step-by-step charging method can also be used, for example, the battery is charged during 0-10% SOC at a current of A times the delithiation capacity of the positive electrode per unit time, the battery is charged during 10-20% SOC at a current of B times the delithiation capacity of the positive electrode per unit time, the battery is charged during 20-30% SOC at a current of C times the delithiation capacity of the positive electrode per unit time, the battery is charged during 30-40% SOC at a current of D times the delithiation capacity of the positive electrode per unit time, the battery is charged during 40-50% SOC at a current of E times the delithiation capacity of the positive electrode per unit time, the battery is charged during 50-60% SOC at a current of F times the delithiation capacity of the positive electrode per unit time, the battery is charged during 60-70% SOC at a current of G times the delithiation capacity of the positive electrode per unit time, etc., wherein at least one of A, B, C, D, E and F is not 4. Those skilled in the art would understand that in the step-by-step charging method, the step-by-step SOC and current can be adjusted as required.

For the battery that has been packaged, the delithiation capacity of the positive electrode is tested by a method for determining the delithiation capacity of the positive electrode. The battery is charged for 2 cycles using the charging process as described above, and then the positive electrode plate is disassembled, and the delithiation capacity Z of the positive electrode is tested by a method for determining the delithiation capacity of the positive electrode. If Z/X ≥ 40%, it is considered that the charging rate meets the requirement of 4 times the delithiation capacity of the positive electrode per unit time.

In some embodiments, the average current of the battery during the charging process from 0% state of charge to 70% state of charge (0-70% SOC) at 35°C is greater than or equal to 4 times the delithiation capacity of the positive electrode per unit time. Thus, the high-rate fast charging capability and cycling performance of the battery can be further improved.

In one embodiment, the test method for the average current of 0-70% SOC is as follows: If a constant current direct charging method is used, the average current is the charging current; and if a step-by-step charging method as described above is used, the average current is (A + B + C + D + E + F + G)/7.

In some embodiments, the negative electrode comprises a current collector and negative electrode active material layers attached to at least one surface of the current collector, wherein the active material layers comprise a first active material layer comprising a first negative electrode active material and a second active material layer comprising a second negative electrode active material attached to the surface of the first active material layer that is far away from the current collector.

In some embodiments, the first negative electrode active material has an average volume particle size Dᵥ₅₀ greater than that of the second negative electrode active material.

In some embodiments, the first negative electrode active material has an average volume particle size Dᵥ₅₀ of 10-20 µm, and the second negative electrode active material has an average volume particle size Dᵥ₅₀ of 9-19 µm, as measured according to the particle size distribution laser diffraction method (specifically refer to GB/T19077.1-2009).

In some embodiments, the first negative electrode active material layer has a compacted density greater than that of the second negative electrode active material layer.

In some embodiments, the first negative electrode active material layer has a compacted density of 1.3-2 g/cm3, and the second negative electrode active material layer has a compacted density of 1.2-1.9 g/cm3. The mass per unit area of the negative electrode material layer, that is, the surface density CW (mg/cm²) of the coating, can be calculated according to weighing the mass of the negative electrode material layer by a standard balance and measuring the coating area of the negative electrode plate by a ruler, respectively. Then, the thickness of the negative electrode material layer is measured through the analysis of ion polishing cross-section morphology by scanning electron microscopy (refer to JY/T010-1996 for details) (at least 5 points are measured, and the average value is taken). Based on the compacted density of the coating film = the surface density CW (mg/cm²) of the coating of the negative electrode plate/the thickness (cm) of the negative electrode material layer, the compacted density PD (mg/cm³) of the negative electrode material layer can be calculated and converted into g/cm³.

In some embodiments, the first negative electrode active material layer has a thickness of 10-120 µm, and the second negative electrode active material layer has a thickness of 10-120 µm, as measured according to the analysis of ion polishing cross-section morphology by scanning electron microscopy (refer to JY/T010-1996) (at least 5 points are measured, and the average value is taken).

In some embodiments, the negative electrode active material layers have a thickness of 30-150 µm, a porosity of 20-60%, optionally 25-40%, and further optionally 27-33%; and a compacted density of 1.2-1.9 g/cm3, optionally 1.3-1.8 g/cm3.

In some embodiments, the electrolyte solution comprises a lithium salt, a solvent and an additive, and the lithium salt comprises a primary lithium salt and a secondary lithium salt.

In some embodiments, the primary lithium salt is different from the secondary lithium salt, and the primary lithium salt or the secondary lithium salt is each independently selected from at least one of LiPF₆, LiN(SO₂F)₂(LiFSI), LiBF₄, LiN(CF₃SO₂)₂(LiTFSI), LiClO₄, LiAsF₆, LiB(C₂O₄)₂(LiBOB), LiBF₂C₂O₄(LiDFOB), lithium difluorodioxalate phosphate (LiDFOP), LiPO₂F₂, LiFSO3, and LiF. The difference between the primary lithium salt and the secondary lithium salt lies in the different contents thereof.

In some preferred embodiments, the primary lithium salt is lithium hexafluorophosphate or LiFSI or a mixture thereof, and the content thereof is 8-20 wt%, optionally 10-15 wt%, based on the total weight of the electrolyte solution; and the secondary lithium salt is at least one of lithium difluorooxalate borate LiBF₂C₂O₄ (LiDFOB), LiBF₄, LiB(C₂O₄)₂(LiBOB), and lithium difluorodioxalate phosphate (LiDFOP), optionally LiDFOB or LiDFOP, and the content thereof is 0.001-2 wt%, for example 1-2 wt%, optionally 0.8-1.5 wt%, based on the total weight of the electrolyte solution.

In some preferred embodiments, the molar concentration b of the lithium salt in the electrolyte solution is 0.6-1.5 mol/L, optionally 0.8-1.2 mol/L.

In some embodiments, the solvent comprises a cyclic ester and a linear ester, and the content of the cyclic ester accounts for 5-40%, optionally 25-35% of the mass of the solvent, and the content of the linear ester accounts for 60-95%, optionally 65-80% of the mass of the solvent.

In some embodiments, the cyclic ester is ethylene carbonate (EC), propylene carbonate (PC) or a combination thereof; and the linear ester includes dimethyl carbonate (DMC).

In some embodiments, in addition to DMC, the linear ester may further comprise at least one selected from the following components: diethyl carbonate (DEC), ethyl methyl carbonate (EMC), methyl formate, methyl acetate (MA), ethyl acetate (EA), butyl acetate, acetonitrile (SN), methyl propionate, ethyl propionate (EP), methyl butyrate, ethyl butyrate, propyl butyrate, butyl butyrate, isopropyl acetate, isoamyl acetate, and a combination thereof; optionally, diethyl carbonate (DEC), ethyl acetate (EA), methyl acetate (MA), acetonitrile (SN), ethyl propionate (EP) and a combination.

In a preferred embodiment, the cyclic ester is ethylene carbonate (EC), and the linear ester includes dimethyl carbonate (DMC) and ethyl methyl carbonate (EMC).

In some embodiments, in the electrolyte solution, the molar concentration b (mol/L) of the lithium salt, the percentage a% of the linear ester in the solvent accounting for the mass of the solvent, and the viscosity c of the electrolyte solution at 25°C satisfy the following relationship:
2 ≤ c + 2*a% ≤ 8, optionally 3 ≤ c + 2*a% ≤ 7; and
2 ≤ c + b ≤ 8, optionally 3 ≤ c + b ≤ 7.

In some embodiments, the positive electrode comprises a current collector and a positive electrode active material layer comprising a positive electrode active material attached to at least one surface of the current collector, and the positive electrode active material comprises a ternary material of formula LiNiₓCo_{y}Q_{z}M_{1-x-y-z}O₂, wherein Q is Mn or Al, M includes at least one of Co, Ni, Mn, Mg, Cu, Zn, Al, Sn, B, Ga, Cr, Sr, V and Ti, 0 ≤ x < 1, optionally 0.5 ≤ x < 1; and 0 ≤ y ≤ 1, 0 ≤ z ≤ 1, and x + y + z ≤ 1.

The lithium ion battery and the power consuming device of the present application will be described below with reference to the drawings as appropriate.

Generally, a lithium ion battery comprises a positive electrode, a negative electrode, an electrolyte and a separator. During the charge/discharge of the battery, active lithium ions are intercalated and de-intercalated back and forth between the positive electrode and the negative electrode. The electrolyte functions to conduct ions between the positive electrode and the negative electrode. The separator is provided between the positive electrode and the negative electrode and mainly functions to prevent the positive and negative electrodes from short-circuiting while enabling lithium ions to pass through.

### Positive electrode

The positive electrode comprises a positive electrode current collector and a positive electrode film layer provided on at least one surface of the positive electrode current collector, wherein the positive electrode film layer comprises a positive electrode active material, and the positive electrode active material comprises a ternary material of formula LiNiₓCo_{y}Q_{z}M_{1-x-y-z}O₂, wherein Q is Mn or Al, M includes at least one of Co, Ni, Mn, Mg, Cu, Zn, Al, Sn, B, Ga, Cr, Sr, V and Ti, 0 ≤ x < 1, optionally 0.5 ≤ x < 1; and 0 ≤ y ≤ 1, 0 ≤ z ≤ 1, and x + y +z ≤ 1.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector may be formed by forming a metal material on the polymer material substrate. Herein, the metal material include, but is not limited to, aluminum, an aluminum alloy, nickel, a nickel alloy, titanium, a titanium alloy, silver and a silver alloy. The polymer material substrate is a substrate such as polypropylene (PP), polyethylene terephthalate (PET), polybutylene terephthalate (PBT), polystyrene (PS), and polyethylene (PE).

In some embodiments, the positive electrode active material may be at least one of a lithium nickel cobalt oxide, a lithium nickel cobalt manganese oxide (LiNi_{1/3}Co_{1/3}Mn_{1/3}O₂ (also referred as NCM₃₃₃), LiNi_{0.5}Co_{0.2}Mn_{0.3}O₂ (also referred as NCM₅₂₃), LiNi_{0.5}Co_{0.25}Mn_{0.25}O₂ (also referred as NCM₂₁₁), LiNi_{0.6}Co_{0.2}Mn_{0.2}O₂ (also referred as NCM₆₂₂), LiNi_{0.65}Co_{0.07}Mn_{0.28}O₂, and LiNi_{0.8}Co_{0.1}Mn_{0.1}O₂ (also referred as NCM₈₁₁)), a lithium nickel cobalt aluminum oxide (e.g., LiNi_{0.85}Co_{0.15}Al_{0.05}O₂, LiNi_{1/3}Co_{1/3}Al_{1/3}O₂) or a modified compound thereof, preferably NCM₆₂₂. However, the present application is not limited to these materials, and other conventional materials that can be used as positive electrode active materials for batteries may also be used. These positive electrode active materials may be used alone or in combination of two or more.

In some embodiments, the positive electrode active material may further comprise other positive electrode active materials known in the art for batteries. As an example, other positive electrode active materials may comprise at least one of the following materials: at least one of a lithium-containing phosphate with olivine structure, a lithium cobalt oxide (e.g., LiCoO₂), a lithium nickel oxide (e.g., LiNiO₂), a lithium manganese oxide (e.g., LiMnO₂ and LiMn₂O₄), a lithium manganese cobalt oxide, a lithium nickel manganese oxide and modified compounds thereof. Examples of lithium-containing phosphates of olivine structure may include, but are not limited to, at least one of lithium iron phosphate (e.g., LiFePO₄ (also referred to as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the weight percentage of the positive electrode active material in the positive electrode film layer is 80-100% by weight, based on the total weight of the positive electrode film layer.

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight percentage of the binder in the positive electrode film layer is 0-20% by weight, based on the total weight of the positive electrode film layer.

In some embodiments, the positive electrode film layer also optionally comprises a conductive agent. As an example, the conductive agent may include at least one of superconducting carbon, carbon black (e.g., acetylene black and Ketjen black), carbon dots, carbon nanotubes, graphene, and carbon nanofibers. The weight percentage of the conductive agent in the positive electrode film layer is 0-20% by weight, based on the total weight of the positive electrode film layer.

In some embodiments, the positive electrode plate can be prepared as follows: the above-mentioned components for preparing the positive electrode plate, such as a positive electrode active material, a conductive agent, a binder and any other components, are dispersed in a solvent (e.g., N-methylpyrrolidone) to form a positive electrode slurry, wherein the positive electrode slurry has a solid content of 40-80 wt%, and the viscosity at room temperature thereof is adjusted to 5000-25000 mPa·s, and the positive electrode slurry is coated onto the surface of the positive electrode current collector, dried and then cold pressed by means of a cold-rolling mill to form a positive electrode plate, wherein the unit surface density of the positive electrode powder coating is 12-26 mg/cm², and the positive electrode plate has a compacted density of 2.0-3.6 g/cm³, optionally 2.3-3.5 g/cm³. The compacted density is calculated according to the following equation:
the compacted density = the surface density of the coating/(the thickness of the electrode plate after pressing - the thickness of the current collector).

### Negative electrode

The negative electrode comprises a negative electrode current collector and a negative electrode film layer (also referred as a negative electrode active material layer) provided on at least one surface of the negative electrode current collector, the negative electrode film layer comprising a negative electrode active material. The negative electrode the technical features of the negative electrode as described above in the present application.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector may be formed by forming a metal material on the polymer material substrate. Herein, the metal material includes but is not limited to copper, a copper alloy, nickel, a nickel alloy, titanium, a titanium alloy, silver and a silver alloy, and the polymer material substrate includes but is not limited to polypropylene (PP), polyethylene terephthalate (PET), polybutylene terephthalate (PBT), polystyrene (PS), polyethylene (PE) and other substrates.

In some embodiments, the negative electrode active material can be a negative electrode active material known in the art for batteries. As an example, the negative electrode active material may comprise at least one of the following materials: synthetic graphite, natural graphite, soft carbon, hard carbon, a silicon-based material, a tin-based material and lithium titanate, etc. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that can be used as negative electrode active materials for batteries can also be used. These negative electrode active materials may be used alone or as a combination of two or more.

In some embodiments, the negative electrode active material comprises one or more of natural graphite, synthetic graphite, mesophase carbon micro beads (abbreviated as MCMB), hard carbon, soft carbon, silicon, a silicon-carbon composite, a silicon-oxide composite, an Li-Sn alloy, an Li-Sn-O alloy, Sn, SnO, SnO₂, lithiation TiO₂-Li₄Ti₅O₁₂ with a spinel structure, and an Li-Al alloy.

In some embodiments, the negative electrode comprises a current collector and negative electrode active material layers attached to at least one surface of the current collector, wherein the active material layers comprise a first active material layer comprising a first negative electrode active material and a second active material layer comprising a second negative electrode active material attached to the surface of the first active material layer that is far away from the current collector.

In some embodiments, the first negative electrode active material is at least one of natural graphite, synthetic graphite, mesophase carbon micro beads (abbreviated as MCMB), hard carbon, soft carbon, silicon, a silicon-carbon composite, a silicon-oxide composite, an Li-Sn alloy, an Li-Sn-O alloy, Sn, SnO, SnO₂, lithiation TiO₂-Li₄Ti₅O₁₂ with a spinel structure, and an Li-Al alloy. The second negative electrode active material is at least one of natural graphite, synthetic graphite, mesophase carbon micro beads (abbreviated as MCMB), hard carbon, soft carbon, silicon, a silicon-carbon composite, a silicon-oxide composite, an Li-Sn alloy, an Li-Sn-O alloy, Sn, SnO, SnO₂, lithiation TiO₂-Li₄Ti₅O₁₂ with a spinel structure, and an Li-Al alloy.

In some embodiments, if the negative electrode active material comprises a mixture of two or more, the average volume particle size of the negative electrode active material refers to the average volume particle size of the mixture.

In some embodiments, the negative electrode active material comprises silicon. The silicon content accounts for 1-25% of the weight of the negative electrode active material layers and is distributed in at least one layer of the active material layer.

In some embodiments, the silicon content (expressed in SiO₂) in the first active material layer is 0-25%, based on the weight of the first active material layer; and the silicon content (expressed in SiO₂) in the second active material layer is 0-25%, based on the weight of the second active material layer.

In some embodiments, the weight percentage of the negative electrode active material in the negative electrode film layer is 70-100% by weight, based on the total weight of the negative electrode film layer.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). The weight percentage of the binder in the negative electrode film layer is 0-30% by weight, based on the total weight of the negative electrode film layer.

In some embodiments, the negative electrode film layer may optionally comprise a conductive agent. The conductive agent may be selected from at least one of superconductive carbon, carbon black (e.g., acetylene black and Ketjen black), carbon dots, carbon nanotubes, graphene, and carbon nanofibers. The weight percentage of the conductive agent in the negative electrode film layer is 0-20% by weight, based on the total weight of the negative electrode film layer.

In some embodiments, the negative electrode film layer may optionally comprise other auxiliary agents, such as thickener (e.g. sodium carboxymethyl cellulose (CMC-Na)), etc. The weight percentage of the other auxiliary agents in the negative electrode film layer is 0-15% by weight, based on the total weight of the negative electrode film layer.

In some embodiments, the negative electrode plate can be prepared as follows: the above-mentioned components for preparing the negative electrode plate, such as a negative electrode active material, a conductive agent, a binder and any other components, are dispersed in a solvent (e.g., deionized water) to form a negative electrode slurry, wherein the negative electrode slurry has a solid content of 30-70 wt%, and the viscosity at room temperature thereof is adjusted to 2000-10000 mPa•s; and the resulting negative electrode slurry is coated onto a negative electrode current collector, followed by a drying procedure and cold pressing (e.g., double rollers), so as to obtain the negative electrode plate. The unit surface density of the negative electrode powder coating is 6-16 mg/cm², and the negative electrode plate has a compacted density of 1.2-2.0 g/m³.

The porosity of the negative electrode active material layer can be obtained by gas replacement method, and the porosity P = (V1 - V2)/V1 × 100%, where V1 represents the apparent volume of the negative electrode film layer and V2 represents the real volume of the negative electrode film layer.

The mass of the negative electrode active material per unit area of the negative electrode can be obtained by weighing same with a standard balance.

The thickness of the negative electrode active material layer may be measured by a sub-micron micrometer caliper, for example, by sub-micron micrometer caliper model Mitutoyo293-100 with a precision of 0.1 µm. It should be noted that the thickness of the negative electrode active material layer mentioned in the present invention refers to the thickness of the negative electrode active material layer which is compacted by cold pressing and used to assemble the negative electrode plate of the battery.

### Electrolyte solution

The electrolyte solution functions to conduct ions between the positive electrode plate and the negative electrode plate.

The electrolyte solution comprises the technical features as described above in the present application.

In some embodiments, the electrolyte solution comprises a lithium salt, a solvent and an additive, and the lithium salt comprises a primary lithium salt and a secondary lithium salt.

In some embodiments, the primary lithium salt is different from the secondary lithium salt, and the primary lithium salt or the secondary lithium salt is each independently selected from one or more of lithium hexafluorophosphate (LiPF₆), lithium difluorosulfonimide (LiN(SO₂F)₂, LiFSI), lithium tetrafluoroborate (LiBF₄), lithium bistrifluoromethanesulfonimide (LiTFSI), lithium perchlorate (LiClO₄), lithium hexafluoroarsenate (LiAsF₆), lithium trifluoromethanesulfonate (LiTFS), lithium dioxalatoborate (LiB(C₂O₄)₂, LiBOB), lithium difluoroxalate borate (LiBF₂C₂O₄, LiDFOB), lithium difluorophosphate (LiPO₂F₂), lithium difluorodioxalate phosphate (LiDFOP), LiPO₂F₂, LiFSO₃, LiF, and lithium tetrafluoroxalate phosphate (LiTFOP).

In some embodiments, the primary lithium salt is different from the secondary lithium salt, and the primary lithium salt or the secondary lithium salt is each independently selected from at least one of LiPF₆, LiN(SO₂F)₂ (LiFSI), LiBF₄, LiN(CF₃SO₂)₂(LiTFSI), LiClO₄, LiAsF₆, LiB(C₂O₄)₂ (LiBOB), LiBF₂C₂O₄ (LiDFOB), lithium difluorodioxalate phosphate (LiDFOP), LiPO₂F₂, LiFSO3, and LiF. The difference between the primary lithium salt and the secondary lithium salt lies in the different contents thereof.

In some preferred embodiments, the primary lithium salt is lithium hexafluorophosphate or LiFSI, and the content thereof is 8-20 wt%, based on the total weight of the electrolyte solution; and the secondary lithium salt is at least one of lithium difluorooxalate borate LiBF₂C₂O₄ (LiDFOB), LiBF₄, LiB(C₂O₄)₂ (LiBOB), and lithium difluorodioxalate phosphate (LiDFOP), optionally LiDFOB or LiDFOP, and the content thereof is 0.001-2 wt%, based on the total weight of the electrolyte solution.

In some preferred embodiments, the molar concentration b of the lithium salt in the electrolyte solution is 0.8-1.2 mol/L.

In some embodiments, the solvent comprises a cyclic ester and a linear ester, and the content of the cyclic ester accounts for 5-40% of the mass of the solvent, and the content of the linear ester accounts for 60-95% of the mass of the solvent.

In some embodiments, the cyclic ester is ethylene carbonate (EC), propylene carbonate (PC) or a combination thereof, and the linear ester includes dimethyl carbonate (DMC).

In some embodiments, in addition to DMC, the linear ester may further comprise at least one selected from the following components: diethyl carbonate (DEC), ethyl methyl carbonate (EMC), methyl formate, methyl acetate (MA), ethyl acetate (EA), butyl acetate, acetonitrile (SN), methyl propionate, ethyl propionate (EP), methyl butyrate, ethyl butyrate, propyl butyrate, butyl butyrate, isopropyl acetate, isoamyl acetate, and a combination thereof; optionally, diethyl carbonate (DEC), ethyl acetate (EA), methyl acetate (MA), acetonitrile (SN), ethyl propionate (EP) and a combination.

In a preferred embodiment, the cyclic ester is ethylene carbonate (EC), and the linear ester includes dimethyl carbonate (DMC) and ethyl methyl carbonate (EMC).

In some embodiments, the additive includes carbonate (e.g., fluoroethylene carbonate (FEC)), sulfate (e.g., vinyl sulfate (DTD)), and sulfonate (e.g., 1,3-propanesultone (PS)). The carbonate includes at least one of fluoroethylene carbonate (FEC), vinylene carbonate (VC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate or trifluoromethylethylene carbonate. The sulfate includes at least one of vinyl sulfate (DTD), diethyl sulfate (DES), dimethyl sulfate (DMS) and 4,4-bis (1,3,2-dioxathiolane)-2,2,2,2-tetraoxide. The sulfonate includes at least one of 1,3-propanesultone (1,3-PS), propylene sultone (PES), 3-fluoro-1,3-propanesultone (FPS) and ethylene methanedisulfonate (MMDS).

In some preferred embodiments, the additive includes fluoroethylene carbonate (FEC), vinyl sulfate (DTD), and 1,3-propanesultone (1,3-PS).

In some preferred embodiments, the mass percentage content of the additive content in the total mass of the electrolyte solution is 0-7%.

In some embodiments, the electrolyte solution further optionally comprises other additives. For example, other additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### Separator

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, nonwoven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, the separator has a thickness of 4-40 µm, optionally 12-20 µm.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

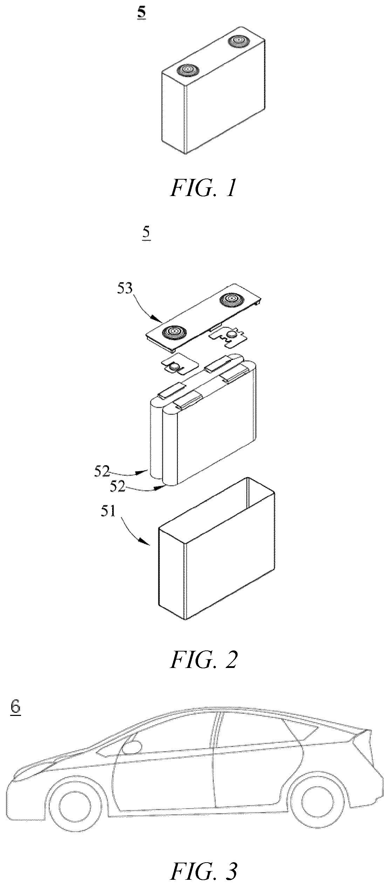

The shape of the secondary battery is not particularly limited in the present application and may be cylindrical, square or of any other shape. For example, FIG. 1 shows a secondary battery 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

In the battery module, a plurality of secondary batteries 5 may be arranged sequentially along a length direction of the battery module. Apparently, the secondary batteries may also be arranged in any other manner. Furthermore, the plurality of secondary batteries 5 may be fixed by fasteners.

Optionally, the battery module may further comprise an outer shell with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

The battery pack may include a battery box and a plurality of battery modules provided in the battery box. The battery box comprises an upper box body and a lower box body, wherein the upper box body may cover the lower box body to form a closed space for accommodating the battery modules. A plurality of battery modules may be arranged in the battery box in any manner.

In addition, the present application further provides a power consuming device. The power consuming device comprises at least one of the secondary battery, the battery module, or the battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 3 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

### Examples

In order to make the technical problems solved by the present application, the technical solutions and the beneficial effects clearer, further detailed description of the present application will be given below with reference to the examples and the accompanying drawings. Apparently, the described examples are merely some, rather than all, of the examples of the present application. The following description of at least one exemplary example is merely illustrative in nature and is in no way to limit the present application and the use thereof. All other examples obtained by those of ordinary skill in the art based on the examples of the present application without involving any inventive effort shall fall within the scope of protection of the present application.

The examples in which techniques or conditions are not specified are based on the techniques or conditions described in documents in the art or according to the product introduction. The reagents or instruments used therein on which no manufacturers are specified are all commercially available conventional products.

### I. Example

### Example 1

1. Preparation of electrolyte solution:
   The preparation of the electrolyte solution was carried out in an argon glove box with water content less than 10 ppm. First, ethylene carbonate (EC), ethyl methyl carbonate (EMC) and diethyl carbonate (DEC) were mixed according to a mass ratio of 3 : 5 : 2, and then 1 mol/L of a primary lithium salt LiPF₆, 1 wt% of a secondary lithium salt LiBF₄ + LiDFOB based on the total electrolyte solution and 4 wt% of an additive FEC + DTD + 1,3-PS based on the total electrolyte solution were added, mixed until uniform, so as to obtain the electrolyte solution. The electrolyte solution had a viscosity of 3.8 mPa.s.
2. Preparation of positive electrode plate:
   A positive electrode active material of ternary material LiNi_{0.65}Co_{0.07}Mn_{0.28}O₂, a binder of polyvinylidene fluoride and a conductive agent of acetylene black were mixed according to a weight ratio of 98 : 1 : 1 and dissolved in a solvent of N-methylpyrrolidone (NMP) to prepare a positive electrode slurry, which is then coated on a current collector of an aluminum foil, dried, and then cold pressed, trimmed, sliced and slitted, so as to prepare a positive electrode plate with a size of 87*665 mm for later use.
3. Preparation of negative electrode plate:
   A negative electrode active material of graphite, SiO₂, a binder of styrene butadiene rubber and a dispersant of sodium carboxymethylcellulose were dissolved in deionized water in a weight ratio of 96.5 : 1.5 : 1 : 1 to form a first negative electrode slurry. A 6 um copper foil was used as the negative electrode current collector, and the first negative electrode slurry was coated on the negative electrode current collector with a coating weight of 4.25 mg/cm² to form a first active material layer. After the first active material layer was dried, a second negative electrode slurry was coated thereon. A negative electrode active material of graphite, SiO₂, a binder of styrene butadiene rubber and a dispersant of sodium carboxymethylcellulose were dissolved in deionized water in a weight ratio of 96.5 : 1.5 : 1 : 1 to form a second negative electrode slurry. The coating weight of the second active material layer was 4.25 mg/cm², forming a second active material layer.
   A composite negative electrode plate was obtained after drying, cold pressing and cutting, and after cold pressing, the thickness of the composite active material layers coated on one surface of the copper foil was 51 um, and the compacted density of the active material layers was 1.65 g/cm³. The negative electrode plate had a size of 93 * 691 mm for later use.
4. Separator
   The base material of the separator was 8 µm thick polyethylene (PE), and 2 µm alumina ceramic layer was coated on both sides of the base material of the separator, and finally, 2.5 mg of binder polyvinylidene fluoride (PVDF) was coated on both sides of the separator coated with ceramic layers, and dried.
5. Assembled into battery:
   the above positive electrode plate, separator and negative electrode plate were wound or stacked in sequence, such that the separator was located between the positive electrode plate and the negative electrode plate to obtain a bare cell, the bare cell was placed in an outer package, 9.3 g of the above prepared electrolyte solution was injected into the dried cell, and a lithium-ion secondary battery with a capacity of 3100 mAh was obtained after the procedures of standing, formation, shaping, etc.
   The preparation steps of examples 2-26 and comparative examples 1-3 were similar to example 1, except that the materials or composition of the electrolyte solution or negative electrode were changed, see Table 1.
   Test for parameters
   Test for porosity P% of negative electrode active material layer
   The test for measuring the porosity P% of the negative electrode active material layer can be carried out as follows: Using inert gas with a small molecular diameter, such as helium or nitrogen, the real volume of the sample to be measured is accurately measured by a displacement method, and the porosity of the sample to be measured is obtained by combining Boyle's Law (PV = nRT). The porosity P = (V11 - V12)/V11 × 100%, where V11 represents the apparent volume of the negative electrode active material layer and V12 represents the real volume of the negative electrode active material layer.

### Test for viscosity of electrolyte solution

At a certain temperature, when the rotor rotates continuously at a constant speed in the sample, the shear force generated causes the spring to generate torque, which is proportional to the viscosity, thus obtaining the viscosity value.

Specifically, the viscosity of the finished electrolyte solution was measured with Brookfield (DV-2TLV) viscometer. The ambient temperature was controlled at 25°C and the ambient humidity was controlled less than 80%, 30 mL of the electrolyte solution was placed in a water bath at 25°C for at least 30 min, the rotor was put into the sample cup, the sample was added to a position about 0.3 cm away from the cup mouth, the connected viscometer was turned on and a rational speed of 70 RPM was selected for testing, 10 data points were collected, and the multi-point average was calculated.

**Table 1 Relevant parameters of examples and comparative examples**

| No. | Electrolyte solution | | | | | | | Negative electrode | | | | | | |
|---|---|---|---|---|---|---|---|---|---|---|---|---|---|---|
| | Primary lithium salt | | Secondary lithium salt | | Solvent compositio n and mass ratio thereof | Additi ve | Viscos ity mPa.s | First active mater ial Dᵥ₅₀ um | Thickn ess of first active materia l layer um | Compac ted density of first active material layer g/cm³ | Secon d active mater ial Dᵥ₅₀ um | Thickn ess of second active materia l layer um | Compac ted density of second active material layer g/cm³ | Porosi ty of negati ve electro de active materi al layer % |
| | Typ e | Concentra tion | Type | Concentra tion | | | | | | | | | | |
| 1 | LiP F₆ | 12.5% | LiBF4 + LiDF OB | 1% | EC/EMC/D EC = 3/5/2 | FEC + DTD + 1,3-PS | 3.8 | 16 | 25 | 1.7 | 11 | 26 | 1.6 | 30 |
| 2 | LiP F₆ | 11.25% | LiBF4 + LiDF OB | 1% | EC/EMC/D EC = 3/5/2 | FEC + DTD + 1,3-PS | 3.5 | 16 | 25 | 1.7 | 11 | 26 | 1.6 | 30 |
| 3 | LiP F₆ | 18.75% | LiBF4 + LiDF OB | 1% | EC/EMC/D EC = 3/5/2 | FEC + DTD + 1,3-PS | 5 | 16 | 25 | 1.7 | 11 | 26 | 1.6 | 30 |
| 4 | LiF SI | 12.5% | LiBF4 + LiDF OB | 1% | EC/EMC/D EC = 3/5/2 | FEC + DTD + 1,3-PS | 3.7 | 16 | 25 | 1.7 | 11 | 26 | 1.6 | 30 |
| 5 | LiP F6 + LiF SI | 12.5% | LiBF4 + LiDF OB | 1% | EC/EMC/D EC = 3/5/2 | FEC + DTD + 1,3-PS | 3.8 | 16 | 25 | 1.7 | 11 | 26 | 1.6 | 30 |
| 6 | LiP F₆ | 12.5% | LiBF4 + LiDF OB + LiPO2 F2 | 1% | EC/EMC/D EC = 3/5/2 | FEC + DTD + 1,3-PS | 3.9 | 16 | 25 | 1.7 | 11 | 26 | 1.6 | 30 |
| 7 | LiP F₆ | 12.5% | LiBF4 + LiDF OB + LiFSO 3 | 1% | EC/EMC/D EC = 3/5/2 | FEC + DTD + 1,3-PS | 3.8 | 16 | 25 | 1.7 | 11 | 26 | 1.6 | 30 |
| 8 | LiP F₆ | 12.5% | LiBF4 + LiDF OB | 1.50% | EC/EMC/D EC = 3/5/2 | FEC + DTD + 1,3-PS | 3.9 | 16 | 25 | 1.7 | 11 | 26 | 1.6 | 30 |
| 9 | LiP F₆ | 12.5% | LiBF4 + LiDF OB | 2% | EC/EMC/D EC = 3/5/2 | FEC + DTD + 1,3-PS | 4 | 16 | 25 | 1.7 | 11 | 26 | 1.6 | 30 |
| 10 | LiP F₆ | 12.5% | LiBF4 + LiDF OB | 1% | EC/EMC/D MC = 3/3/4 | FEC + DTD + 1,3-PS | 3.2 | 16 | 25 | 1.7 | 11 | 26 | 1.6 | 30 |
| 11 | LiP F₆ | 12.5% | LiBF4 + LiDF OB | 1% | EC/EMC/E A = 3/3/4 | FEC + DTD + 1,3-PS | 3 | 16 | 25 | 1.7 | 11 | 26 | 1.6 | 30 |
| 12 | LiP F₆ | 12.5% | LiBF4 + LiDF OB | 1% | EC/EMC/ MA = 3/3/4 | FEC + DTD + 1,3-PS | 2.6 | 16 | 25 | 1.7 | 11 | 26 | 1.6 | 30 |
| 13 | LiP F₆ | 12.5% | LiBF4 + LiDF OB | 1% | EC/EMC/D EC = 3/5/2 | VC + DTD + 1,3-PS | 3.8 | 16 | 25 | 1.7 | 11 | 26 | 1.6 | 30 |
| 14 | LiP F₆ | 12.5% | LiBF4 + LiDF OB | 1% | EC/EMC/D EC = 3/5/2 | FEC + DTD + 1,3-PS + TMSP | 3.8 | 16 | 25 | 1.7 | 11 | 26 | 1.6 | 30 |
| 15 | LiP F₆ | 12.5% | LiBF4 + LiDF OB | 1% | EC/EMC/D EC = 3/5/2 | FEC + DTD + 1,3-PS | 3.8 | 15 | 25 | 1.7 | 12 | 26 | 1.6 | 33 |
| 16 | LiP F₆ | 12.5% | LiBF4 + LiDF OB | 1% | EC/EMC/D EC = 3/5/2 | FEC + DTD + 1,3-PS | 3.8 | 20 | 25 | 1.7 | 18 | 26 | 1.6 | 27 |
| 17 | LiP F₆ | 12.5% | LiBF4 + LiDF OB | 1% | EC/EMC/D EC = 3/5/2 | FEC + DTD + 1,3-PS | 3.8 | 16 | 25 | 1.4 | 11 | 26 | 1.3 | 40 |
| 18 | LiP F₆ | 12.5% | LiBF4 + LiDF OB | 1% | EC/EMC/D EC = 3/5/2 | FEC + DTD + 1,3-PS | 3.8 | 16 | 25 | 1.9 | 11 | 26 | 1.8 | 25 |
| 19 | LiP F₆ | 12.5% | LiBF4 + LiDF OB | 1% | EC/EMC/D EC = 3/5/2 | FEC + DTD + 1,3-PS | 3.8 | 16 | 10 | 1.7 | 11 | 12 | 1.6 | 30 |
| 20 | LiP F₆ | 12.5% | LiBF4 + LiDF OB | 1% | EC/EMC/D EC = 3/5/2 | FEC + DTD + 1,3-PS | 3.8 | 16 | 110 | 1.7 | 11 | 112 | 1.6 | 30 |
| 21 | LiP F₆ | 12.5% | LiBF4 + LiDF OB | 1% | EC/EMC/D EC = 3/5/2 | FEC + DTD + 1,3-PS | 3.8 | 13 | 25 | 1.7 | 11 | 26 | 1.6 | 35 |
| 22 | LiP F₆ | 12.5% | LiBF4 + LiDF OB | 1% | EC/EMC/D EC = 3/5/2 | FEC + DTD + 1,3-PS | 3.8 | 19 | 25 | 1.7 | 17 | 26 | 1.6 | 28 |
| 23 | LiP F₆ | 12.5% | LiBF4 + LiDF OB | 1% | EC/EMC/D EC = 3/5/2 | FEC + DTD + 1,3-PS | 3.8 | 16 | 16 | 1.7 | 11 | 20 | 1.6 | 30 |
| 24 | LiP F₆ | 12.5% | LiBF4 + LiDF OB | 1% | EC/EMC/D EC = 3/5/2 | FEC + DTD + 1,3-PS | 3.8 | 16 | 48 | 1.7 | 11 | 50 | 1.6 | 30 |
| 25 | LiP F₆ | 12.5% | LiBF4 + LiDF OB | 1% | EC/EMC/D EC = 3/5/2 | FEC + DTD + 1,3-PS | 3.8 | 16 | 25 | 1.5 | 11 | 26 | 1.4 | 38 |
| 26 | LiP F₆ | 12.5% | LiBF4 + LiDF OB | 1% | EC/EMC/D EC = 3/5/2 | FEC + DTD + 1,3-PS | 3.8 | 16 | 25 | 1.8 | 11 | 26 | 1.7 | 28 |
| Compara tive 1 | LiP F₆ | 12.5% | / | / | EC/EMC/D EC = 3/5/2 | FEC + DTD + 1,3-PS | 3.7 | 16 | 25 | 1.7 | 11 | 26 | 1.6 | 30 |
| Compara tive 2 | LiP F₆ | 12.5% | LiBF4 + LiDF OB | 1% | EC/EMC/D EC = 3/5/2 | FEC + DTD + 1,3-PS | 3.8 | 16 | 25 | 2.1 | / | / | / | 18 |
| Compara tive example 3 | LiP F₆ | 12.5% | LiBF4 + LiDF OB | 1% | EC/EMC/D EC = 3/5/2 | FEC + DTD + 1,3-PS | 7 | 16 | 25 | 1.7 | 11 | 26 | 1.6 | 30 |

### III. Test of battery performance

### 1. Delithiation capacity of positive electrode

The battery was disassembled in a PRS340/11-119-11 Braun glove box, and the positive electrode plate was taken and assembled into a positive electrode-lithium plate CR2430-type semi-button battery, the area of the positive electrode plate was a mm², and the electrolyte solution was a solution of 1 M LiPF6 in EC/EMC/DEC = 3/5/2; and then the assembled semi-button battery was allowed to stand for 3 h, and the test was carried out at 25°C. First, the battery was charged for delithiation at 0.1 C in a voltage range of 2.5-e V, where e was the upper limit voltage designed for the cell, and then the battery was discharged at 0.05 C for lithium intercalation to 2.5 V, this process was repeated for 2 cycles, and the capacity of the discharged button battery in the second cycle was recorded as Y mAh. In the actual design of the battery, the length of the positive electrode plate was b mm, the width was c mm, and the number of surfaces coated with the positive electrode active material of the positive electrode current collector was d, then the delithiation capacity of the positive electrode X = Y/a*b*c*d.

### 2. Lithium intercalation capacity of negative electrode

The battery was disassembled in a PRS340/11-119-11 Braun glove box, and the negative electrode plate was taken and assembled into a negative electrode-lithium plate CR2430-type semi-button battery, the area of the negative electrode plate was f mm², and the electrolyte solution was a solution of 1 M LiPF6 in EC/EMC/DEC = 3/5/2; and then the assembled semi-button battery was allowed to stand for 3 h, and the test was carried out at 25°C. First, the battery was discharged for lithium intercalation at 0.1 C in a voltage range of 2 V - 0 V, and then charged at 0.05 C for delithiation to 2 V, this process was repeated for 2 cycles, and the capacity of the discharged button battery in the second cycle was recorded as Z mAh. In the actual design of the battery, the length of the negative electrode plate was h mm, the width was i mm, and the number of surfaces coated with the negative electrode active material of the negative electrode current collector was d, then the lithium intercalation capacity of the negative electrode = Z/f*h*i*d.

### 3. Test for charging ability

Test for rate performance (test when charged to 70% SOC): the test temperature was adjusted to 35°C, and the lithium ion battery was charged at an x C rate (x was 0.5, 0.8, 1, 1.2, 1.5, 2, 2.5, and 3), and then discharged at 1 C, and the charging rate was increased in turn, with the anode potential of 0 V as the charging cutoff condition, so as to simulate the maximum charging rate that can be achieved when the ranges of 0-10% SOC, 10-20% SOC, 20-30% SOC, 30-40% SOC, 40-50% SOC, 50-60% SOC, 60-70% SOC were achieved, and then the charging time (min) required for 0-70% SOC was calculated.

### 4. Test for cycling performance

At 25°C, the secondary battery was charged at a constant current of 1C to 4.3 V and then charged at a constant voltage to a current of 0.05 C, the secondary battery was in a fully charged state at this moment, and the charge capacity at this moment was recorded, i.e., the charge capacity of the 1st cycle; and the secondary battery was left to stand for 5 min and then discharged at a constant current of 1 C to 2.8 V, which was regarded as a charge/discharge cycling process, and the discharge capacity at this moment was recorded, i.e., the discharge capacity of the 1st cycle. The secondary battery was subjected to a charge/discharge cycling test according to the above method, and the discharge capacity after each cycle was recorded. Capacity retention rate of secondary battery after cycling at 45°C for 600 cycles (%) = discharge capacity of the 600th cycle/discharge capacity of the 1st cycle × 100%.

### III. Test results of examples and comparative examples

The batteries of the examples and comparative examples are respectively prepared according to the method described above and various performance parameters thereof are measured. The results are shown in Table 2 below.

**Table 2 Performance of batteries of examples and comparative examples**

| No. | Lithium intercalation capacity of negative electrode (mAh) | Delithiation capacity of positive electrode (mAh) | CB value | Ratio of maximum charging current in 0-70% SOC to delithiation capacity of positive electrode pee unit time | Charging time required for 0-70% SOC/ min | Capacity retention rate after 600 cycles |
|---|---|---|---|---|---|---|
| Example 1 | 3731.6 | 3310.1 | 1.13 | 5.5 | 10 | 91.0% |
| Example 2 | 3731.6 | 3310.1 | 1.13 | 5.7 | 9 | 93.0% |
| Example 3 | 3731.6 | 3310.1 | 1.13 | 5 | 13 | 88.0% |
| Example 4 | 3731.6 | 3310.1 | 1.13 | 5.6 | 9.5 | 92.0% |
| Example 5 | 3731.6 | 3310.1 | 1.13 | 5.55 | 9.7 | 91.5% |
| Example 6 | 3731.6 | 3310.1 | 1.13 | 5.4 | 10.5 | 90.0% |
| Example 7 | 3731.6 | 3310.1 | 1.13 | 5.45 | 10.3 | 90.5% |
| Example 8 | 3731.6 | 3310.1 | 1.13 | 5.35 | 11 | 89.5% |
| Example 9 | 3731.6 | 3310.1 | 1.13 | 5.2 | 12 | 89.0% |
| Example 10 | 3731.6 | 3310.1 | 1.13 | 5.9 | 8 | 94.0% |
| Example 11 | 3731.6 | 3310.1 | 1.13 | 6.1 | 7 | 95.0% |
| Example 12 | 3731.6 | 3310.1 | 1.13 | 6.3 | 6 | 95.5% |
| Example 13 | 3731.6 | 3310.1 | 1.13 | 5.45 | 10.3 | 90.8% |
| Example 14 | 3731.6 | 3310.1 | 1.13 | 5.55 | 9.7 | 92.0% |
| Example 15 | 3731.6 | 3310.1 | 1.13 | 5.65 | 9.2 | 92.5% |
| Example 16 | 3731.6 | 3310.1 | 1.13 | 5.35 | 11 | 89.5% |
| Example 17 | 2748.4 | 1846.2 | 1.49 | 5.9 | 8 | 94.0% |
| Example 18 | 3767 | 3501 | 1.06 | 5.3 | 11.3 | 89.0% |
| Example 19 | 1318.3 | 1100.6 | 1.2 | 5.7 | 9 | 93.0% |
| Example 20 | 14500.8 | 11000 | 1.32 | 5.5 | 10 | 91.0% |
| Example 21 | 3731.6 | 3310.1 | 1.13 | 5.7 | 9 | 93.0% |
| Example 22 | 3731.6 | 3310.1 | 1.13 | 5.4 | 10.5 | 90.0% |
| Example 23 | 2364.9 | 2068.8 | 1,14 | 5.6 | 9.5 | 92.0% |
| Example 24 | 6455.4 | 5869.8 | 1.1 | 5.3 | 11.3 | 89.0% |
| Example 25 | 2952.1 | 2387.1 | 1.24 | 5.8 | 8.5 | 93.5% |
| Example 26 | 3563.3 | 2864.5 | 1.24 | 5.4 | 10.5 | 90.0% |
| Comparative example 1 | 3731.6 | 3310.1 | 1.13 | 5.5 | 10 | 83.0% |
| Comparative example 2 | 3731.6 | 3310.1 | 1.13 | 4 | 10 | 40.0% |
| Comparative example 3 | 3731.6 | 3700.1 | 1.01 | 3.5 | 20 | 50.0% |

From the above examples and comparative examples, it can be seen that the lithium ion battery of the present application has good fast charging ability and capacity retention rate when the viscosity of the electrolyte solution is in the range of 1-6 mPa.s and the CB value is 1.1-1.5, even when the porosity of the negative electrode active material is in the range of 25-40%. For example, the charging time required for 0-80% SOC can be shortened to be 6 minutes, and the capacity retention rate is still maintained at more than 95% after 600 cycles (see example 12).

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that are made to the embodiments and are conceivable to those skilled in the art, and other modes constructed by combining some of the constituent elements of the embodiments also fall within the scope of the present application.

## Claims

1. A lithium ion battery, comprising a positive electrode, a negative electrode and an electrolyte solution, wherein the electrolyte solution has a viscosity c of 1-6 mPa.s at 25°C; and the ratio CB of the lithium intercalation capacity of the negative electrode to the delithiation capacity of the positive electrode is 1.05-1.5.

2. The battery according to claim 1, wherein during the charging process of the battery from 0% state of charge to 70% state of charge at 35°C, there is a current that is greater than or equal to 4 times the delithiation capacity of the positive electrode per unit time.

3. The battery according to claim 1 or 2, wherein the average current of the battery during the charging process from 0% state of charge to 70% state of charge at 35°C is greater than or equal to 4 times the delithiation capacity of the positive electrode per unit time.

4. The battery according to any one of claims 1-3, wherein the negative electrode comprises a current collector and negative electrode active material layers attached to at least one surface of the current collector, wherein the active material layers comprise a first active material layer comprising a first negative electrode active material and a second active material layer comprising a second negative electrode active material attached to the surface of the first active material layer that is far away from the current collector.

5. The battery according to claim 4, wherein the first negative electrode active material has an average volume particle size Dᵥ₅₀ greater than that of the second negative electrode active material.

6. The battery according to claim 4 or 5, wherein the first negative electrode active material layer has a compacted density greater than that of the second negative electrode active material layer.

7. The battery according to any one of claims 4-6, wherein the negative electrode active material layers have a thickness of 30-150 µm, a porosity of 20-60%, and a compacted density of 1.2-1.9 g/cm³.

8. The battery according to any one of claims 1-7, wherein the electrolyte solution comprises a lithium salt, a solvent and an additive, and the lithium salt comprises a primary lithium salt and a secondary lithium salt.

9. The battery according to claim 8, wherein the primary lithium salt is different from the secondary lithium salt, and the primary lithium salt or the secondary lithium salt is each independently selected from at least one of LiPF₆, LiN(SO₂F)₂, LiBF₄, LiN(CF₃SO₂)₂, LiClO₄, LiAsF₆, LiB(C₂O₄)₂, LiBF₂C₂O₄, LiDFOP, LiPO₂F₂, LiFSO₃, and LiF.

10. The battery according to claim 8 or 9, wherein the primary lithium salt is lithium hexafluorophosphate or LiFSI, and the content thereof is 8-20 wt%, based on the total weight of the electrolyte solution; and the secondary lithium salt is at least one of lithium difluorooxalate borate, LiBF₄, LiB(C₂O₄)₂, and lithium difluorodioxalate phosphate (LiDFOP), and the content thereof is 0.001-2 wt%, based on the total weight of the electrolyte solution.

11. The battery according to any one of claims 8-10, wherein the solvent comprises a cyclic ester and a linear ester, and the content of the cyclic ester accounts for 5-40% of the mass of the solvent, and the content of the linear ester accounts for 60-95% of the mass of the solvent.

12. The battery according to claim 11, wherein the cyclic ester is ethylene carbonate, propylene carbonate or a combination thereof; and the linear ester includes dimethyl carbonate.

13. The battery according to claim 12, wherein the linear ester is selected from diethyl carbonate, ethyl methyl carbonate, methyl formate, methyl acetate, ethyl acetate, butyl acetate, methyl propionate, methyl butyrate, ethyl butyrate, propyl butyrate, butyl butyrate, isopropyl acetate, isoamyl acetate, and a combination thereof.

14. The battery according to any one of claims 8-13, wherein in the electrolyte solution, the molar concentration b (mol/L) of the lithium salt, the percentage a% of the linear ester in the solvent accounting for the mass of the solvent, and the viscosity c of the electrolyte solution at 25°C satisfy the following relationship:
2 ≤ c + 2*a% ≤ 8; and
2 ≤ c + b ≤ 8.

15. The battery according to any one of claims 1-14, wherein the positive electrode comprises a current collector and a positive electrode active material layer comprising a positive electrode active material attached to at least one surface of the current collector, and the positive electrode active material comprises a ternary material of formula LiNiₓCo_{y}Q_{z}M_{1-x-y-z}O₂, wherein Q is Mn or Al, M includes at least one of Co, Ni, Mn, Mg, Cu, Zn, Al, Sn, B, Ga, Cr, Sr, V and Ti, 0 ≤ x < 1, 0 ≤ y ≤ 1, 0 ≤ z ≤ 1, and x + y + z ≤ 1.

16. A power consuming device, comprising a secondary battery according to any one of claims 1-15.
